# EUROPÄISCHE PATENTANMELDUNG

(11) **EP 3 771 136 A1**
(43) Veröffentlichungstag der Anmeldung: **27.01.2021**
(21) Anmeldenummer: 19187714.1
(22) Anmeldetag: 23.07.2019
(51) Int. Cl.: H04L 7/00, H04L 25/00, G01D 5/244, G01D 18/00

(54) **VERFAHREN ZUM BETRIEB EINER EINGABEBAUGRUPPE UND EINGABEBAUGRUPPE**

(71) Anmelder: Siemens Aktiengesellschaft, 80333 München (DE)
(72) Erfinder: Zipper, Mathias, 91452 Wilhermsdorf (DE)

(57) **Zusammenfassung**

Die Erfindung betrifft ein Verfahren zum Betrieb einer Eingabebaugruppe (1) mit einer Synchron-Seriellen-Schnittstelle (SSI), wobei über einen ersten Anschluss (11) ein Taktsignal (CL) ausgegeben wird und über einen zweiten Anschluss (12) ein serieller Messwert (data) empfangen wird, wobei die Eingabebaugruppe (1) in einem Ermittlungsmodus (EM) und in einem Messmodus (MM) betrieben wird, wobei
- in dem Ermittlungsmodus (EM) eine Signallaufzeit (t_{d}) einer an die Anschlüsse (11,12) angeschlossenen Leitung (L) ermittelt wird und
- in dem Messmodus (MM) die ermittelte Signallaufzeit (t_{d}) bei der Messung folgendermaßen berücksichtigt wird, mit dem Aussenden einer ersten Taktflanke (20) des Taktsignals (CL) wird ein Zeitzähler (Z1) gestartet und wenn der Wert des Zeitzählers (Z1) den Wert der Signallaufzeit (t_{d}) erreicht hat, wird der Messwert (data) am zweiten Anschluss (12) eingelesen.

## Beschreibung

Die Erfindung betrifft ein Verfahren zum Betrieb einer Eingabebaugruppe mit einer Synchron-Seriellen-Schnittstelle, wobei über einen ersten Anschluss ein Taktsignal ausgegeben wird und über einen zweiten Anschluss ein serieller Messwert empfangen wird.

Ebenso betrifft die Erfindung eine Eingabebaugruppe mit einer Synchron-Seriellen-Schnittstelle umfassend einen ersten Anschluss, einen zweiten Anschluss, ein Sendemittel, ein Empfangsmittel, wobei das Sendemittel ausgestaltet ist, über den ersten Anschluss ein Taktsignal auszugeben, und das Empfangsmittel ausgestaltet ist, über den zweiten Anschluss einen seriellen Messwert zu empfangen.

Eine Synchron-Serielle-Schnittstelle (SSI) ist eine Schnittstelle für z.B. Absolutwertgeber (beispielsweise Weg-Messsysteme). Sie ermöglicht es, durch eine serielle Datenübertragung eine Absolutinformation über beispielsweise eine Position zu erhalten. Eine Datenübertragung basiert auf einer RS422-Hardware (Sender/Empfänger), es wird eine Punkt-zu-Punkt-Verbindung aufgebaut. In einem Sensor/Geber wird ein Schieberegister permanent mit einem aktuellen Messwert geladen. Wenn ein Datenwert gelesen werden soll, gibt beispielsweise eine Eingabebaugruppe einen Takt auf eine Taktleitung aus. Mit einer ersten fallenden Flanke des Taktsignals, wird beispielsweise ein Monoflop im Sensor/Geber umgeschaltet, welches das Schieberegister vom parallelen Laden eines Messwertes in eine serielle Ausgabe umschaltet. Bei jeder folgenden steigenden Taktflanke des Taktsignals wird jetzt ein Datenbit ausgegeben. Wenn das niederwertigste Bit empfangen wurde, wird der Takt gestoppt. Das Monoflop, das von den Taktpulsen immer nachgetriggert wurde, fällt nach Ablauf der Schaltzeit wieder in den Grundzustand und erlaubt wieder die Übernahme der Messwerte in das Schieberegister.

Derartige zuvor erklärte Synchron-Serielle-Schnittstelle (SSI) werden beispielsweise in Automatisierungsbaugruppen zur Positionserfassung eingesetzt. Nach heutigem Kenntnisstand ist beispielsweise bei der Absolutwert-Erfassungsbaugruppe SIMATIC SM338 für das ET200 System eine maximale Kabellänge zwischen Baugruppe und Geber von 320 Metern freigegeben, bei welcher für einen Takt von 125 kHz noch eine sichere Datenübertragung gewährleistet ist. Bei höheren SSI-Taktraten reduzieren sich die maximal möglichen Kabellängen, beispielsweise auf 8 Meter bei 2 MHz, 10 Meter bei 1,5 MHz, 20 Meter bei 1 MHz, 60 Meter bei 500 KHz, 160 Meter bei 250 KHz und entsprechend 320 Meter bei 125 KHz.

Es ist Aufgabe der vorliegenden Erfindung ein Verfahren und eine Baugruppe mit einer SST-Schnittstelle bereitzustellen, bei welchem es beispielsweise möglich ist, die Kabellänge zu erhöhen und eine sichere Datenübertragung dennoch zu gewährleisten.

Für das eingangs genannte Verfahren wird die Aufgabe dadurch gelöst, dass die Eingabebaugruppe in einem Ermittlungsmodus und in einem Messmodus betrieben wird, wobei in dem Ermittlungsmodus eine Signallaufzeit einer an die Anschlüsse angeschlossene Leitung ermittelt wird und in dem Messmodus die ermittelte Signallaufzeit bei der Messung folgendermaßen berücksichtigt wird:
Mit dem Aussenden einer erste Taktflanke des Taktsignals wird ein Zeitzähler gestartet und wenn der Wert des Zeitzählers den Wert der Signallaufzeit erreicht hat, wird der Messwert am zweiten Anschluss eingelesen.

Wenn in der Eingabebaugruppe die zeitliche Verzögerung zwischen einem ausgegebenen Signal einer Taktflanke und dem empfangenen Signal einer Datenflanke bekannt ist, so kann diese gemessene oder parametrierte Verzögerung beim Einlesen der SSI-Daten berücksichtigt werden, nämlich mit einer ausgegebenen steigenden Taktflanke wird eine Delay-Zeit bzw. ein Zeitzähler neu gestartet und nach Ablauf der Delay-Zeit kann das SSI-Datensignal eingelesen werden, dadurch ist eine deutliche Vergrößerung der zulässigen Leitungslänge bei gleichbleibender Taktfrequenz möglich. Das bedeutet, durch eine Entkopplung der eingelesenen Daten vom ausgegebenen Takt kann man die heute mögliche maximale Leitungsverzögerung von einem SSI-Takt auf zwei SSI-Takte (oder auch mehr) vergrößern. Als SSI-Takt bezeichnet man auch die maximale Bit-Zeit. Eine Bit-Zeit ist die Zeit, die vergeht, bis von einem ausgegebenen Takt ein erstes Datensignal, empfangen.

Eine Ermittlung der Signallaufzeit kann auf unterschiedliche Art erfolgen, als vorteilhaft hat sich folgendes herausgestellt:
a) Zur Ermittlung der Signallaufzeit sendet die Baugruppe ein Taktsignal mit einem SSI-Takt mit einer kleineren Frequenz als später im Messmodus verwendet wird und wenn die erste gesendete steigende Taktflanke wieder am zweiten Anschluss ankommt, wird die Signallaufzeit ermittelt oder
b) Ein an die Anschlüsse angeschlossener Geber wird auf einem bekannten Test-Wert eingestellt und wenn dieser bekannte Test-Wert wieder am zweiten Anschluss ankommt, wird die Signallaufzeit ermittelt oder
c) Ein Anwender parametriert die Baugruppe mit der angeschlossenen Leitungslänge der Leitung und ein Berechnungsmittel errechnet die Signallaufzeit.

So kann beispielsweise ein Anwender einer industriellen Anlage die Leitungslänge zwischen der Eingabebaugruppe und einem Geber in die Eingabebaugruppe eingeben und die Eingabebaugruppe errechnet automatisch die passende Verzögerungszeit und kann sich darüber hinaus auch noch bei Veränderung der Leitungslängen automatisch anpassen.

Auch wird es als vorteilhaft angesehen, wenn die Eingabebaugruppe nach dem Einschalten automatisch in den Ermittlungsmodus schaltet und eine Signallaufzeit-Messung durchführt.

Bei der eingangs genannten Eingabebaugruppe wird die eingangs genannte Aufgabe dadurch gelöst, dass ein Modus-Schaltmittel vorhanden ist, welches ausgestaltet ist, in einem Ermittlungsmodus ein Ermittlungsmittel zu aktivieren und in einem Messmodus ein Einlesemittel zu aktivieren, wobei das Ermittlungsmittel ausgestaltet ist, eine Signallaufzeit einer an die Anschlüsse angeschlossene Leitung zu ermitteln und das Einlese-Mittel ausgestaltet ist, den Messwert einzulesen wenn ein Zeitzähler den Wert der Signallaufzeit erreicht hat, wobei der Zeitzähler nach dem Aussenden einer ersten Taktflanke des Taktsignals gestartet wird.

Durch die Entkopplung der eingelesenen Daten von dem ausgegebenen Takt kann die Signallaufzeit aufgrund einer maximalen Leitungslänge länger als bisher sein. In einer ersten Alternative ist das Ermittlungsmittel zusammen mit dem Schaltmittel und dem Empfangsmittel folgendermaßen ausgestaltet:
Zur Ermittlung der Signallaufzeit sendet die Baugruppe ein Taktsignal mit einem SSI-Takt mit einer kleineren Frequenz als später im Messmodus verwendet wird und wenn die erste gesendete steigende Taktflanke wieder am zweiten Anschluss ankommt wird die Signallaufzeit ermittelt.

Eine zweite alternative Ausgestaltung sieht vor, das Ermittlungsmittel zusammen mit dem Sendemittel und dem Empfangsmittel folgendermaßen auszugestalten, zur Ermittlung der Signallaufzeit wird ein an die Anschlüsse angeschlossener Geber auf einen bekannten Test-Wert eingestellt und wenn dieser bekannte Test-Wert aufgrund der am Geber ankommenden Taktflanke vom Geber gesendet wird und der Test-Wert vom Empfangsmittel gelesen wird, kann die Signallaufzeit ermittelt werden.

Eine dritte alternative Ausgestaltung sieht vor, dass ein Berechnungsmittel vorhanden ist, welches ausgestaltet ist, dass ein Anwender eine Leitungslänge einer zum Geber führenden Leitung parametriert und die Signallaufzeit aus der Länge in der Baugruppe automatisch errechnet wird.

Die Zeichnung zeigt ein Ausführungsbeispiel der Erfindung. Dabei zeigt die
- FIG 1: eine prinzipielle Anordnung von Eingabebaugruppe und Geber,
- FIG 2: ein detailliert dargestelltes Blockschaltbild der Eingabebaugruppe,
- FIG 3: eine Prinzipdarstellung der Datenübertragung zwischen Eingabebaugruppe und Geber,
- FIG 4: Signalverläufe an der Eingabebaugruppe und dem Geber und
- FIG 5: eine Tabelle, welche den Zusammenhang zwischen den benutzten SSI-Taktfrequenzen und den aktuell unterstützten Leitungslängen und der erfindungsgemäß vergrößerten Leitungslänge darstellt.

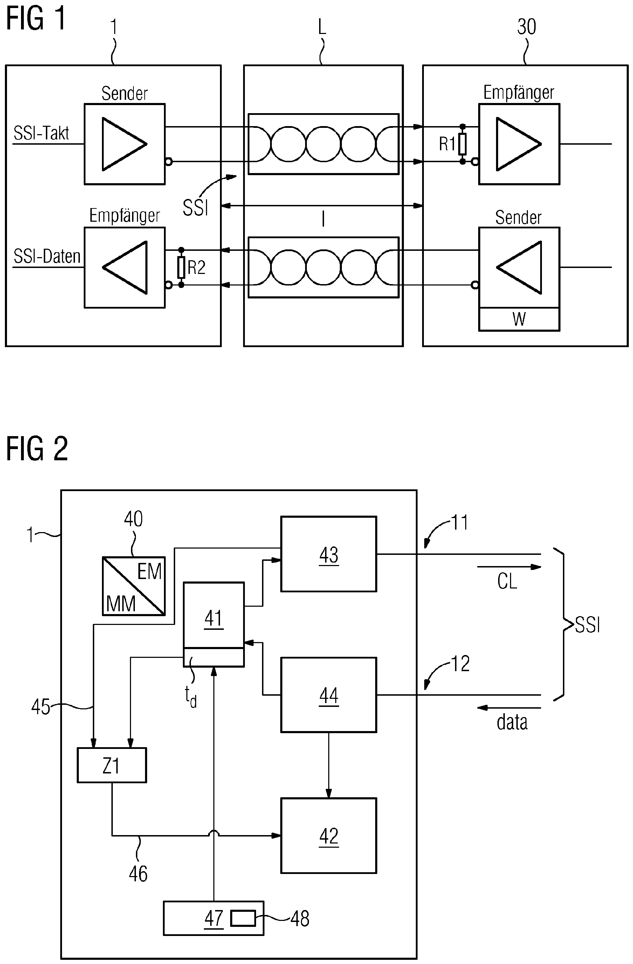

Gemäß FIG 1 ist eine Eingabebaugruppe 1 an eine Leitung L angeschlossen und an die Leitung L ist wiederum ein Geber 30 angeschlossen. Die Eingabebaugruppe 1 funktioniert nach dem Prinzip einer Synchron-Seriellen-Schnittstelle (SSI). Die Eingabebaugruppe 1 weist dazu einen Sender und einen Empfänger auf, ebenso weist der Geber 30 einen Sender und einen Empfänger auf. Von der Eingabebaugruppe 1 werden über den Sender ein Taktsignal CL (FIG 2) zu dem Geber 30 gesendet, welcher dadurch veranlasst wird, mit seinem Sender seriell Takt für Takt einen Messwert (Data) zum Empfänger der Eingabebaugruppe 1 zurückzusenden. Der Empfänger im Geber 30 ist mit einem ersten Abschlusswiderstand R1 an die Leitung L angepasst und der Empfänger in der Eingabebaugruppe 1 ist mit einem zweiten Abschlusswiderstand R2 an die Leitung L angepasst.

Mit der FIG 2 wird anhand eines Blockschaltbildes eine Eingabebaugruppe 1 beschrieben, mit welcher es möglich ist, die Leitungslängen von bisher ca. 320 Meter bei 125 kHz beispielsweise auf 700 Meter zu vergrößern. Dazu weist die Eingabebaugruppe 1 mit ihrer Synchron-Seriellen-Schnittstelle SSI einen ersten Anschluss 11, einen zweiten Anschluss 12, ein Sendemittel 43 und ein Empfangsmittel 44 auf, wobei das Sendemittel 43 ausgestaltet ist, über den ersten Anschluss 11 ein Taktsignal CL auszugeben und das Empfangsmittel 44 ist ausgestaltet über den zweiten Anschluss einen seriellen Messwert data zu empfangen.

Ein Modus-Schaltmittel 40 ermöglicht es, den ausgegebenen Takt CL und das Einlesen des Messwertes data voneinander zu entkoppeln. Dazu ist das Modus-Schaltmittel 40 ausgestaltet, in einem Ermittlungsmodus EM ein Ermittlungsmittel 41 zu aktivieren und in einem Messmodus MM ein Einlese-Mittel 42 zu aktivieren. Das Ermittlungsmittel 41 ist ausgestaltet, eine Signallaufzeit t_{d} der an die Anschlüsse 12 angeschlossenen Leitung L zu ermitteln und das Einlese-Mittel 42 ist ausgestaltet, den Messwert data einzulesen, wenn ein Zeitzähler Z1 den Wert der Signallaufzeit t_{d} erreicht hat. Der Zeitzähler Z1 wird dazu mit dem Aussenden einer ersten Taktflanke 20 des Taktsignals CL gestartet. Für das Starten ist das Sendemittel 43 über eine Triggerleitung 45 mit dem Zeitzähler Z1 verbunden. Der Zeitzähler Z1 ist wiederum mit einer Enableleitung 46 mit dem Einlesemittel 42 verbunden, um bei Ablauf des Zeitzähler Z1 dem Einlesemittel 42 mitzuteilen, dass es jetzt gültige Daten einlesen kann.

Der Zeitzähler Z1 ist mit dem Ermittlungsmittel 41 verbunden und holt sich aus einen Speicher des Ermittlungsmittels 41 die ermittelte Signallaufzeit t_{d} zum Vergleich des aktuellen Wertes des Zeitzählers Z1 mit der Signallaufzeit t_{d}.

Auch ist es möglich anstatt eines automatischen Ermittelns über das Ermittlungsmittel 41 die Baugruppe zu parametrieren, dazu wird in einem Speicher 48 für die Leitungslänge l die Leitungslänge l der Leitung L hinterlegt und ein Berechnungsmittel 47 errechnet automatisch die Signallaufzeit t_{d}.

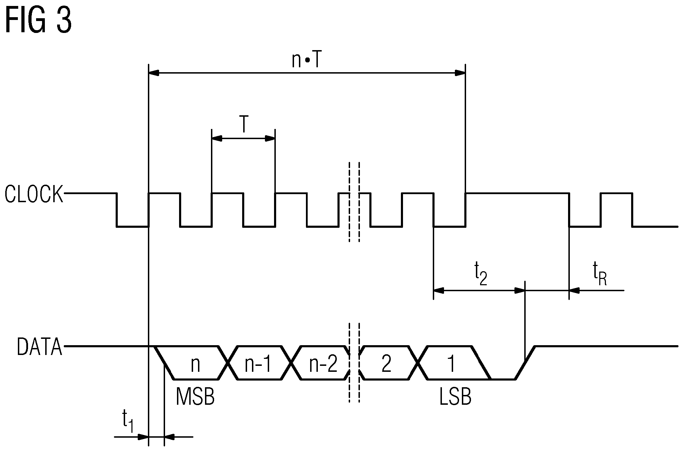

Gemäß FIG 3 ist das Prinzip der synchron seriellen Datenübertragung dargestellt. Ein Clock-Signal mit einer Periodendauer T und einer Datenwortlänge n wird zu einem Geber 30 gesendet, welcher mit einem Data-Signal antwortet und dementsprechend zunächst das erste Bit (LSB) sendet und dann die folgenden Bits bis zu einem letzten Bit n (MSB). T1 ist dabei die Ausgabeverzögerungszeit im Geber 20.

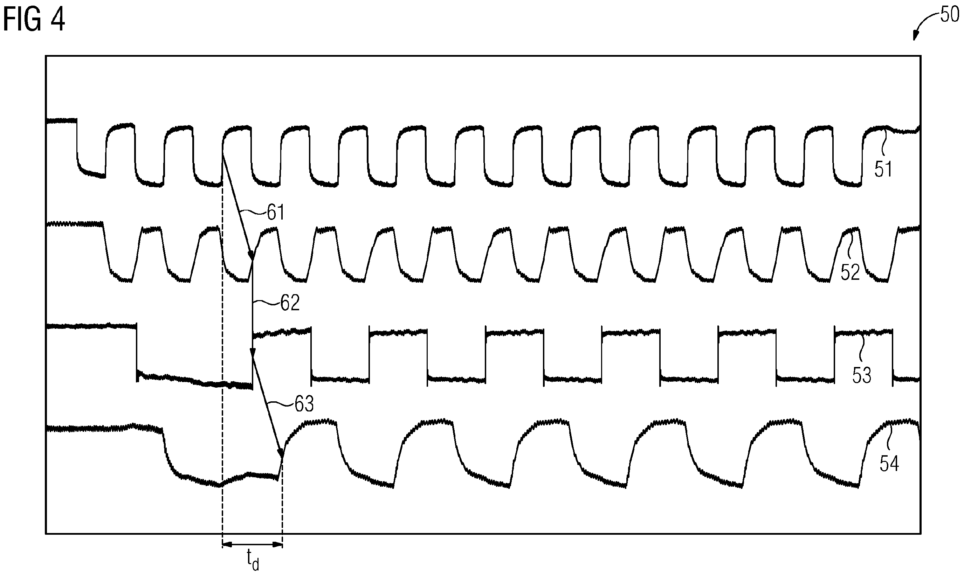

Mit der FIG 4 werden Signalverläufe 50 an der Eingabebaugruppe 1 und dem Geber 30 dargestellt. Ein erster Signalverlauf 51 ist der Signalverlauf am ersten Anschluss (Taktsignal), ein zweiter Signalverlauf 52 ist der Signalverlauf am Gebereingang (Takt), ein dritter Signalverlauf 53 ist der Signalverlauf am Geberausgang (data) und ein vierter Signalverlauf 54 ist der Signalverlauf am zweiten Anschluss 12 der Eingabebaugruppe 1 (data).

Zwischen dem ersten Signalverlauf 51 und dem zweiten Signalverlauf 52 ist eine erste Verzögerungszeit 61 zu erkennen, welche durch eine einfache Leitungslaufzeit hervorgerufen wird. Zwischen dem zweiten Signalverlauf 52 und dem dritten Signalverlauf 53 ist eine zweite Verzögerungszeit 62 zu erkennen, welche der Reaktionszeit des Gebers 30 entspricht, diese aber im Vergleich zur Leitungslaufzeit relativ gering ausfällt. Zwischen dem dritten Signalverlauf 53 und dem vierten Signalverlauf 54 ist eine dritte Verzögerungszeit 63 dargestellt, welche nun auch die zweite Leitungslaufzeit enthält. Dementsprechend ergibt sich eine Signallaufzeit t_{d}, ausgehend von der steigenden Flanke des ersten Signalverlaufs 51 und der ankommenden steigenden Flanke des vierten Signalverlaufs 54.

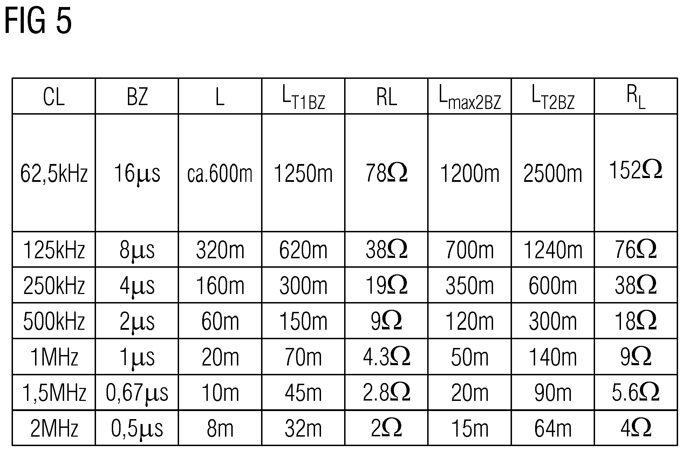

Mit der FIG 5 ist beispielhaft der Zusammenhang zwischen einer Taktfrequenz CL, den Bitzeiten BZ, der Leitungslänge l, einer theoretisch maximalen Leitungslänge l bei maximal 1 Bitzeit Lt1BZ, ein Leitungswiderstand LR, eine maximale Leitungslänge l bei maximal 2 Bitzeiten Lmax2BZ, eine theoretische maximale Leitungslänge bei maximal 2 Bitzeiten LT2BZ und wiederum der Leitungswiderstand dargestellt. Zu erkennen ist deutlich in der zweiten Zeile mit 125 kHz wie eine zuvor erreichte Länge von 120 m bei 2 Bitzeiten auf ca. 600 m angestiegen ist.

## Patentansprüche

1. Verfahren zum Betrieb einer Eingabebaugruppe (1) mit einer Synchron-Seriellen-Schnittstelle (SSI), wobei über einen ersten Anschluss (11) ein Taktsignal (CL) ausgegeben wird und über einen zweiten Anschluss (12) ein serieller Messwert (data) empfangen wird,
**dadurch gekennzeichnet, dass** die Eingabebaugruppe (1) in einem Ermittlungsmodus (EM) und in einem Messmodus (MM) betrieben wird, wobei
- in dem Ermittlungsmodus (EM) eine Signallaufzeit (t_{d}) einer an die Anschlüsse (11,12) angeschlossenen Leitung (L) ermittelt wird und
- in dem Messmodus (MM) die ermittelte Signallaufzeit (t_{d}) bei der Messung folgendermaßen berücksichtigt wird, mit dem Aussenden einer ersten Taktflanke (20) des Taktsignals (CL) wird ein Zeitzähler (Z1) gestartet und wenn der Wert des Zeitzählers (Z1) den Wert der Signallaufzeit (t_{d}) erreicht hat, wird der Messwert (data) am zweiten Anschluss (12) eingelesen.

2. Verfahren nach Anspruch 1, wobei die Signallaufzeit (t_{d}) auf eine der folgenden Arten ermittelt wird:
a) zur Ermittlung der Signallaufzeit (t_{d}) sendet die Baugruppe ein Taktsignal (CL) mit einem SSI-Takt mit einer kleineren Frequenz als später im Messmodus (MM) verwendet wird und wenn die erste gesendete steigende Taktflanke (20) wieder am zweiten Anschluss (12) ankommt, wird die Signallaufzeit (t_{d}) ermittelt oder
b) ein an die Anschlüsse (11,12) angeschlossener Geber (30) wird auf einen bekannten Test-Wert (W) eingestellt und wenn dieser bekannte Test-Wert (W) wieder am zweiten Anschluss (12) ankommt wird die Signallaufzeit (t_{d}) ermittelt oder
c) ein Anwender parametriert die Baugruppe (1) mit der angeschlossenen Leitungslänge (l) der Leitung (L) und ein Berechnungsmittel (47) errechnet die Signallaufzeit (t_{d}).

3. Verfahren nach Anspruch 1 oder 2, wobei der Ermittlungsmodus (EM) zur Ermittlung der Signallaufzeit (t_{d}) automatisch nach dem Einschalten der Eingabebaugruppe (1) ausgeführt wird.

4. Eingabebaugruppe (1) mit einer Synchron-Seriellen-Schnittstelle (SSI) umfassend
einen ersten Anschluss (11),
einen zweiten Anschluss (12),
ein Sendemittel (43),
ein Empfangsmittel (44),
wobei das Sendemittel (43) ausgestaltet ist über den ersten Anschluss (11) ein Taktsignal (CL) auszugeben, und
das Empfangsmittel (44) ausgestaltet ist über den zweiten Anschluss (12) einen seriellen Messwert (data) zu empfangen,
**gekennzeichnet durch** ein
Modus-Schaltmittel (40), welches ausgestaltet ist in einem Ermittlungsmodus (EM) ein Ermittlungsmittel (41) zu aktivieren und in einem Messmodus (MM) ein Einlese-Mittel (42) zu aktivieren, wobei das
- Ermittlungsmittel (41) ausgestaltet ist eine Signallaufzeit (t_{d}) einer an die Anschlüsse (11,12) angeschlossenen Leitung (L) zu ermitteln und dass
- Einlese-Mittel (42) ausgestaltet ist den Messwert (data) einzulesen, wenn ein Zeitzähler (Z1) den Wert der Signallaufzeit (t_{d}) erreicht hat, wobei der Zeitzähler (Z1) mit dem Aussenden einer ersten Taktflanke (20) des Taktsignals (CL) gestartet wird.

5. Eingabebaugruppe (4) nach Anspruch 4, wobei das Ermittlungsmittel (41) zusammen mit dem Sendemittel (43) und dem Empfangsmittel (44) folgendermaßen ausgestaltet ist, zur Ermittlung der Signallaufzeit (t_{d}) sendet die Baugruppe ein Taktsignal (CL), mit einem SSI-Takt mit einer kleineren Frequenz als später im Messmodus (MM) verwendet wird und wenn die erste gesendete steigende Taktflanke (20) wieder am zweiten Anschluss (12) ankommt wird die Signallaufzeit (t_{d}) ermittelt.

6. Eingabebaugruppe (4) nach Anspruch 4, wobei das Ermittlungsmittel (41) zusammen mit dem Sendemittel (43) und dem Empfangsmittel (44) folgendermaßen ausgestaltet ist, zur Ermittlung der Signallaufzeit (t_{d}) wird ein an die Anschlüsse (11,12) angeschlossener Geber (30) auf einen bekannten Test-Wert (W) eingestellt, und wenn dieser bekannte Test-Wert (W) aufgrund der am Geber (30) ankommenden Taktflanke (20) vom Geber (30) gesendet wird und der Test-Wert (W) am Empfangsmittel (44) ankommt kann die Signallaufzeit (t_{d}) ermittelt werden.

7. Eingabebaugruppe (4) nach Anspruch 4, wobei ein Berechnungsmittel (47) vorhanden ist, welches ausgestaltet ist, das ein Anwender eine Leitungslänge (l) einer zum Geber (30) führenden Leitung (L) parametriert und die Signallaufzeit (t_{d}) aus der Länge (l) errechnet.
